(19) Europäisches Patentamt
European Patent Office
Office européen des brevets

(11)  EP 2 948 790 B1

(12)  **FASCICULE DE BREVET EUROPEEN**

(45) Date de publication et mention de la délivrance du brevet:
**09.10.2019 Bulletin 2019/41**

(51) Int Cl.:
***G01S 13/75*** *(2006.01)*    ***B60W 30/12*** *(2006.01)*

(21) Numéro de dépôt: **14704835.9**

(22) Date de dépôt: **17.01.2014**

(86) Numéro de dépôt international:
**PCT/FR2014/000011**

(87) Numéro de publication internationale:
**WO 2014/114856 (31.07.2014 Gazette 2014/31)**

(54) **SYSTEME D'AIDE A LA CONDUITE**

FAHRERASSISTENZSYSTEM

DRIVER ASSISTANCE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2013 FR 1300136**

(43) Date de publication de la demande:
**02.12.2015 Bulletin 2015/49**

(73) Titulaire: **Ecole Supérieure de Physique et de Chimie Industrielles de la Ville de Paris 75005 Paris (FR)**

(72) Inventeurs:
- **HOLÉ, Stéphane**
  **F-75013 Paris (FR)**
- **HOUDALI, Nabil**
  **F-91260 Juvisy sur Orge (FR)**
- **DITCHI, Thierry**
  **F-91310 Leuville sur Orge (FR)**
- **GÉRON, Emmanuel**
  **F-45640 Sandillon (FR)**

(74) Mandataire: **Cornuejols, Georges Cassiopi 230 Avenue de l'Aube Rouge 34170 Castelnau-le-Lez (FR)**

(56) Documents cités:
**US-A1- 2008 167 821**

- **CUGIANI C ET AL: "Millimetre wave radar sensor for the highway global positioning of a vehicle", VEHICLE NAVIGATION AND INFORMATION SYSTEMS CONFERENCE, 1994. PROCEEDIN GS., 1994 YOKOHAMA, JAPAN 31 AUG.-2 SEPT. 1994, NEW YORK, NY, USA,IEEE, 31 août 1994 (1994-08-31), pages 409-414, XP010136639, DOI: 10.1109/VNIS.1994.396804 ISBN: 978-0-7803-2105-2**
- **POLYCHRONOPOULOS A ET AL: "Integrated object and road border tracking using 77 GHz automotive radars", IEE PROCEEDINGS: RADAR, SONAR & NAVIGATION, INSTITUTION OF ELECTRICAL ENGINEERS, GB, vol. 151, no. 6, 10 décembre 2004 (2004-12-10), pages 375-381, XP006023106, ISSN: 1350-2395, DOI: 10.1049/IP-RSN:20041067**

**Description**

L'invention concerne en général un dispositif de guidage et un système de guidage, également appelé système d'aide à la conduite, d'un mobile circulant sur une infrastructure, et plus particulièrement, un système utilisant des réflecteurs électromagnétiques passifs.

Dans le cadre de la sécurité routière par exemple, les sorties de routes sont la cause de nombreux accidents mortels. Il est donc important de pouvoir connaître en permanence la position du véhicule, et ceci indépendamment des conditions environnementales ou climatiques.

De nombreux systèmes de guidage existent déjà. Parmi ceux-ci, le choix d'un système de détection utilisant le magnétisme présente de nombreux avantages. En effet, les propriétés magnétiques des matériaux ne sont presque pas modifiées par les conditions climatiques extérieures telles que la pluie, le brouillard, la neige, la luminosité, ...

On connaît déjà des systèmes de guidage par des procédés magnétiques statiques faisant appel à un marquage magnétique sous forme d'aimants permanents enterrés dans la chaussée ou sous forme d'une bande magnétisée déposée sur ou intégré dans la chaussée. Dans le cas d'aimants permanents, le système de détection magnétique embarqué sur le véhicule détecte un champ magnétique dont l'atténuation est proportionnelle au cube de la distance entre un des aimants permanents et le capteur magnétique. Dans le cas d'une bande magnétisée, le système de détection magnétique embarqué sur le véhicule détecte un champ magnétique dont l'atténuation est proportionnelle au carré de la distance entre la bande magnétisée et le capteur magnétique. Dans ces deux cas, cela conduit à de très faibles valeurs du signal mesuré dès que la distance entre la source du champ magnétique et le capteur augmente et que le champ magnétique rémanent des aimants permanents ou de la bande est faible, et par conséquent, à de mauvaises performances du système de positionnement. Ainsi pour des aimants permanents de faible champ magnétique rémanent ou pour une bande magnétisée, leur position devrait être sensiblement au centre de la voie de circulation de sorte à minimiser leur distance aux capteurs embarqués dans le véhicule lorsqu'il circule sur cette chaussée. Pour des aimants permanents de champ magnétique rémanent plus fort, leur positionnement peut être rendu plus excentré sur la voie de circulation.

Le coût d'installation d'aimants permanents ou d'une bande magnétisée enterrés dans la chaussée est très important ce qui limite leur implantation, donc l'impact sur l'amélioration de la sécurité, ainsi que les évolutions susceptibles d'être apportées au système d'aide à la conduite une fois implanté, par exemple lorsqu'un rétrécissement de chaussé est imposé par des travaux.

L'installation d'une bande magnétisée déposée sur la surface de la chaussée et au centre de la voie de circulation risque de perturber l'aspect visuel de la chaussée et donc de provoquer des risques pour le conducteur si ce dernier confond la bande magnétisée avec les marquages au sol. L'installation d'une bande magnétisée sous ou à proximité des marquages au sol ne permettrait pas aux capteurs embarqués dans le véhicule de détecter le champ magnétique produit par la bande magnétisée et donc rendrait le système d'aide à la conduite inutilisable.

On connait également l'utilisation d'un champ magnétique variable produit par le passage d'un courant alternatif dans un ou plusieurs fils enterrés dans la chaussée. Le champ magnétique alternatif est plus facile à détecter même pour des amplitudes de champ magnétique sensiblement plus faibles que celles produites par des aimants permanents ou par une bande magnétisée. Le cout d'installation reste cependant élevé à cause de l'enterrement des fils, cela nécessite une source d'énergie permanente pour alimenter lesdits fils en courant alternatif et le dispositif devient inutilisable en cas de rupture d'un desdits fils puisque cela empêcherait le courant électrique de passer et donc de produire le champ magnétique nécessaire à la détection dudit fil rompu par les capteurs embarqués dans le véhicule circulant sur la chaussée.

On connait également l'article « Millimétré Wave Radar Sensor for the Highway Global Positioning of a Vehicle » de C. Cugiani et al. qui divulgue un dispositif de contrôle de trajectoire en fonction d'une mesure de distance latérale du véhicule par rapport à une infrastructure.

L'article « Integrated object and road border traking using 77GHz automotive radars » de A. Polychronopoulos et al. divulgue des radars haute resolution pour estimer une distance à un bord d'une instrastructure et effectuer une reconstruction de scénarios de circulation en fonction de suivi d'objets.

La demande de brevet US 2008/167821 montre un dispositif d'aide à la conduite comportant des réflecteurs d'ondes électromagnétiques agencés pour réfléchir des ondes émises par un véhicule circulant sur une infrastructure vers ledit véhicule, chaque réflecteur comprenant au moins un résonateur modifiant la phase des ondes réfléchies.

Le but de la présente invention est de proposer un système d'aide à la conduite innovant, comprenant notamment des réflecteurs d'ondes électromagnétiques déposés sous les marquages au sol ou dans l'infrastructure et qui soient bon marché à installer, à entretenir et à faire évoluer, et de dispositifs embarqués dans le véhicule permettant l'émission, la réception d'ondes électromagnétiques et les traitements des signaux appropriés pour ce système d'aide à la conduite. Lorsque les réflecteurs sont disposés sous les marquages au sol, ils peuvent également servir à quantifier l'état desdits marquages au sol et donc d'optimiser leur entretien.

A cet effet, un premier aspect de la présente invention a pour objet un dispositif d'aide à la conduite pour fournir, à un véhicule circulant sur une infrastructure, des informations, comportant :

des moyens d'émission d'ondes électromagnétiques embarqués dans ledit véhicule comprenant au moins une antenne d'émission agencée pour émettre des ondes électromagnétiques de fréquence variable vers des réflecteurs installés dans l'infrastructure,
des moyens de réception d'ondes électromagnétiques embarqués dans ledit véhicule comprenant au moins une antenne de réception, agencée pour recevoir les ondes électromagnétiques réfléchies par lesdits réflecteurs, et
des moyens de traitement configurés pour extraire des ondes électromagnétiques réfléchies par lesdits réflecteurs et captées par les moyens de réception, des données permettant de déterminer la distance entre lesdits réflecteurs et le véhicule et
dans lequel les moyens de traitement sont configurés pour détecter, à partir des ondes électromagnétiques réfléchies, les modes de résonance des réflecteurs pour déterminer la distance entre lesdits réflecteurs et le véhicule.

Selon un mode de réalisation de l'invention les ondes électromagnétiques émises sont de fréquence inférieure à 1 GHz. De façon préférentielle les ondes électromagnétiques émises sont de fréquence entre 100 MHz et 1 GHz. Cette gamme de fréquence permet la pénétration dans l'eau.

Selon un mode de réalisation de l'invention, les moyens de traitement sont configurés pour déterminer la distance entre les réflecteurs et le véhicule à partir de la phase des modes de résonance détectés.

Selon un mode de réalisation de l'invention, les moyens de traitement sont configurés pour extraire des ondes électromagnétiques réfléchies des données stockées par les réflecteurs.

Selon un mode de réalisation de l'invention, les moyens de traitement sont configurés pour déterminer des données stockées par les réflecteurs à partir de l'amplitude des modes de résonance détectés

Selon un mode de réalisation de l'invention, les moyens d'émission sont configurés pour émettre des ondes électromagnétiques à une fréquence lentement variable en direction des réflecteurs.

Selon un mode de réalisation de l'invention, les moyens de réception sont configurés pour convertir les ondes électromagnétiques captées en un signal électrique de même fréquence.

Selon un mode de réalisation de l'invention, les moyens de traitement sont configurés pour comparer l'amplitude et/ou la phase des ondes électromagnétiques captées par les moyens de réception par rapport à l'amplitude et/ou la phase des ondes électromagnétiques émises par les moyens d'émission.

Selon un mode de réalisation de l'invention, les moyens de traitement sont configurés pour traiter les évolutions de ladite amplitude et/ou de ladite phase en fonction de la fréquence des ondes électromagnétiques émises par les moyens d'émission pour détecter parmi les bruits électromagnétiques environnants les modes de résonance imposés par les réflecteurs afin de calculer la position du véhicule par rapport à celle desdits réflecteurs.

Selon un mode de réalisation de l'invention, les moyens d'émission sont configurés pour émettre les ondes électromagnétiques par impulsions séparées par des laps de temps irréguliers

Selon un mode de réalisation de l'invention, les moyens de traitement sont configurés pour multiplier le signal électrique reçu des moyens de réception par un signal de référence pour déterminer l'amplitude et la phase des ondes électromagnétiques captées par les moyens de réception en fonction de la fréquence des ondes électromagnétiques produites par les moyens d'émission.

Selon un mode de réalisation de l'invention, ladite au moins une antenne des moyens d'émission et ladite au moins une antenne des moyens de réception comportent des polarisations croisées chacune étant à un angle sensiblement autour de 45° par rapport à la polarisation des réflecteurs.

Selon un mode de réalisation de l'invention, ladite au moins une antenne des moyens d'émission est placée à une position à laquelle le rayonnement dudit au moins une antenne d'émission présente un faible niveau vers ladite au moins une antenne des moyens de réception et/ou la captation de ladite au moins une antenne des moyens de réception présente un faible niveau en provenance de ladite au moins une antenne des moyens d'émission.

Selon un mode de réalisation de l'invention, un matériau absorbant agencé pour faire barrage aux ondes électromagnétiques est placé entre ladite au moins une antenne des moyens d'émission et ladite au moins une antenne des moyens de réception

Dans un mode de réalisation les moyens d'émission sont configurés pour émettre des ondes électromagnétiques à une fréquence lentement variable en direction des réflecteurs. Dans ce mode de réalisation les réflecteurs sont configurés pour réagir en renvoyant des ondes électromagnétiques de même fréquence et d'amplitude plus ou moins marquée selon les modes de résonance desdits réflecteurs en direction des moyens de réception. Les moyens de réception dans ce mode de réalisation sont configurés pour convertir les ondes électromagnétiques captées en un signal électrique de même fréquence et pour transmettre ce signal électrique aux moyens de traitement. Dans un mode de réalisation les moyens de traitement sont configurés pour extraire l'amplitude et la phase des ondes électromagnétiques captées par les moyens de réception par rapport à celles des ondes électromagnétiques émises par les moyens d'émission. Selon un mode de réalisation les moyens de traitement sont configurées pour traiter les évolutions de ladite amplitude et de ladite phase en fonction de la fréquence des ondes électromagnétiques émises par les moyens d'émission pour détecter parmi les bruits électromagnétiques environnants les modes de résonance imposés par les résonateurs desdits réflecteurs afin de calculer la position du véhicule par rapport à celle desdits réflecteurs et de déterminer l'information que porte éventuellement lesdits réflecteurs.

Dans un mode de réalisation particulier, les moyens d'émission sont configurés pour émettre les ondes électromagnétiques par impulsions séparées par des laps de temps irréguliers de sorte à ce que s'il y a deux véhicules cote à cote équipés d'un dispositif d'aide à la conduite selon un mode de réalisation de la présente invention, il y ait une fenêtre temporelle pendant laquelle un seul des véhicules émette des ondes électromagnétiques pour éviter des interférences. La présence de deux véhicules équipés dudit dispositif à proximité l'un de l'autre se détecte facilement sur l'amplitude des ondes électromagnétiques captées par les moyens de réception lorsque les deux véhicules émettent en même temps. Lorsque qu'un seul véhicule émet des ondes électromagnétiques, le signal produit par les moyens de réception est transmis aux moyens de traitement. Dans un mode de réalisation les moyens de traitement sont configurés pour multiplier le signal électrique reçu des moyens de réception par un signal de référence pour déterminer l'amplitude et la phase des ondes électromagnétiques captées par les moyens de réception en fonction de la fréquence des ondes électromagnétiques produites par les moyens d'émission. Les moyens de traitement sont configurés pour détecter les modes de résonance des réflecteurs et pour les extraire du bruit. Cela permet d'estimer l'amplitude des ondes réfléchies par les réflecteurs et la phase de ces ondes par rapport à celle des ondes émises. L'amplitude des modes de résonance détectés représente l'information stockée par les réflecteurs et la phase représente la distance entre les réflecteurs et le véhicule.

Dans un autre mode de réalisation l'antenne d'émission et de réception peuvent être séparées pour éviter l'utilisation de composants micro-ondes spécifiques comme par exemple des circulateurs ou des coupleurs. Il est alors avantageux de disposer les antennes en polarisation croisée de sorte à ce qu'elles n'interfèrent pas trop entre elles, chacune étant à un angle sensiblement autour de 45° par rapport à la polarisation des réflecteurs pour maximiser le signal. Une autre solution avantageuse selon un mode de réalisation de l'invention consiste à placer les antennes à des positions auxquelles le rayonnement des antennes d'émission présente un faible niveau vers les antennes de réception et/ou la captation des antennes de réception présente un faible niveau en provenance des antennes d'émission. Une variante de cette dernière solution avantageuse consiste à placer entre les antennes d'émission et de réception un matériau absorbant ayant pour objet de faire barrage aux ondes électromagnétiques pouvant aller directement desdites antennes d'émission auxdites antennes de réception

Dans un autre mode de réalisation, deux dispositifs d'émission et de réception sont mis de part et d'autre du véhicule de sorte à détecter les réflecteurs positionnés à droite et les réflecteurs positionnés à gauche de la voie de circulation, ce qui permet une estimation de la position relative du véhicule par rapport au centre de ladite voie de circulation réputé trajectoire idéale. Ce mode de réalisation peut être encore amélioré en plaçant des dispositifs d'émission et de réception aux quatre coins du véhicule ce qui permet en plus de la position du véhicule d'estimer son angle par rapport à la direction de la voie de circulation et ainsi de permettre aux systèmes d'aide à la conduite de prédire de façon plus précise la trajectoire exacte du véhicule.

Dans ces différents modes de réalisation, les antennes peuvent être intégrée dans le véhicule à tout endroit permettant aux ondes électromagnétiques produites par le dispositif d'émission d'atteindre les réflecteurs et aux ondes électromagnétiques réfléchies par lesdits réflecteurs d'atteindre le dispositif de réception, par exemple et de manière non limitative, dans les parechocs, les garnitures des portières ou des ailes, les bas de caisse.

Un autre aspect de l'invention présent un véhicule comportant un dispositif d'aide à la conduite selon l'un des modes de réalisation de l'invention.

Selon un mode de réalisation de l'invention, des moyens de réception et des moyens d'émission sont placés de chaque côté du véhicule de sorte à détecter les réflecteurs positionnés à droite et les réflecteurs positionnés à gauche d'une voie de circulation de l'infrastructure.

Selon un mode de réalisation de l'invention, des moyens de réception et des moyens d'émission sont placés aux quatre coins extrêmes du véhicule.

Un deuxième aspect de la présente invention a pour objet un dispositif d'aide à la conduite installé dans une infrastructure de circulation comportant des réflecteurs d'ondes électromagnétiques agencés pour réfléchir des ondes électromagnétiques vers un véhicule circulant sur l'infrastructure, le dispositif comprenant un résonateur présentant un ou plusieurs modes de résonance de sorte à modifier la puissance et/ou la phase des ondes réfléchies par lesdits réflecteurs en fonction de la fréquence .

Selon un mode de réalisation ledit au moins un résonateur est adapté pour coder des informations destinées audit véhicule.

des informations sont codées selon la phase et/ou l'amplitude des modes de résonance.

Selon un mode de réalisation l'amplitude des modes de résonance représente une information stockée par le dispositif.

Selon un mode de réalisation la phase des modes de résonance représente la distance entre le réflecteur et le véhicule.

Selon un mode de réalisation les résonateurs présentent des fréquences de résonances différentes chaque fréquence de résonance étant associé à un élément différent de l'infrastructure.

Selon un mode de réalisation chaque réflecteur comporte au moins une antenne dont le diagramme de rayonnement est choisi pour permettre une captation et un rayonnement suffisant dans un plan sensiblement parallèle à une chaussée de l'infrastructure et dans une direction principale sensiblement perpendiculaire à la direction de circulation.

Selon un mode de réalisation les réflecteurs sont configurés pour recevoir des ondes électromagnétiques et renvoyer des ondes électromagnétiques de même fréquence et d'amplitude en fonction des modes de résonance dudit réflecteur en direction du véhicule.

Selon un mode de réalisation le dispositif est disposé dans une composition de marquage au sol

Dans un mode de réalisation chaque réflecteur comporte au moins une antenne dont le diagramme de rayonnement est choisi pour permettre une captation et un rayonnement suffisant dans un plan sensiblement parallèle à la chaussée et dans une direction principale sensiblement perpendiculaire à la direction de circulation.

Selon un mode de réalisation les résonateurs sont réalisés, par exemple et de manière non limitative, par des condensateurs et des inductances, par des cavités, ou par des résonateurs à ondes de volume ou à ondes de surface et ayant pour objet de modifier la puissance et/ou la phase des ondes réfléchies par les réflecteurs en fonction de sa fréquence afin que les réflecteurs puissent être distingués des bruits électromagnétiques environnants. La fréquence des ondes électromagnétiques utilisés est de sorte à permettre une pénétration suffisante dans l'eau, la neige ou la boue par exemple.

Dans un mode de réalisation avantageux les réflecteurs présentent des fréquences de résonance différentes permettant de distinguer, par exemple et de manière non limitative, les différentes voies de circulation, notamment la limite droite de la chaussée, la limite gauche de la chaussée et les limites séparant deux voies. Ainsi le comportement du système d'aide à la conduite peut s'adapter selon que le véhicule entre dans une trajectoire dangereuse, par exemple une sortie de route, ou change simplement de voie de circulation, par exemple pour doubler un autre véhicule. Ces informations peuvent être codées par les réflecteurs en se servant, par exemple et de manière non limitative, de l'écart de fréquence existant entre deux modes de résonance distincts, un écart de fréquence donné codant un niveau binaire « 0 » et un écart de fréquence différent codant un niveau binaire « 1 ». Un ensemble de modes de résonance peut également coder des informations plus complexes, les écarts de fréquence entre les modes de résonance successifs codant un message plus complet à l'image des codes à barres.

Dans un autre mode de réalisation, l'alternance de réflecteurs de modes de résonance différents permet un codage d'information plus riche et plus long que dans le mode de réalisation précédant pouvant indiquer des informations de danger à venir liées à la voie de circulation, par exemple des virages, des dévers, des rétrécissements de chaussée, ou toute autre information de nature à adapter le comportement du conducteur en fonction des dangers prévisibles.

Dans un mode de réalisation supplémentaire, les réflecteurs sont insérés et/ou dissimulés dans une composition de marquage au sol ce qui permet à des véhicules spécialement équipés de caractériser la densité de réflecteurs présents dans chaque marquage au sol à chaque passage du véhicule spécialement équipé et donc de déclencher une rénovation des marquages au sol uniquement si ceux-ci sont trop dégradés, notamment par la perte d'un nombre important de réflecteurs. L'insertion des réflecteurs dans les marquages au sol utilise des techniques connues de signalisation routière, comme celles utilisées pour y inclure des billes de verre à des fins de rétro-réflexion de la lumière provenant des phares des véhicules.

Un autre aspect de l'invention présente un système d'aide à la conduite comportant un dispositif embarqué selon l'un des modes de réalisation du premier aspect de l'invention et un dispositif installé dans une infrastructure de circulation selon l'un des modes de réalisation du deuxième aspect de l'invention.

D'autres caractéristiques et avantages de l'invention apparaîtront encore à la lecture de la description qui va suivre. Celle-ci est purement illustrative et devrait être lue en regard des dessins annexés sur lesquels :

la figure 1 présente un schéma de principe du système d'aide à la conduite selon au moins un mode de réalisation de l'invention,

la figure 2 présente le schéma d'un réflecteur et des dispositifs embarqués sur le véhicule selon un mode de réalisation de l'invention dans le but de déterminer la distance du véhicule au réflecteur,

la figure 3a présente un exemple de l'amplitude du signal produit par le dispositif de réception en fonction de la fréquence d'émission dans une bande de fréquences autour d'un mode de résonance du réflecteur, cette amplitude étant superposée à une amplitude théorique ajustée,

la figure 3b présente un exemple de la phase du signal produit par le dispositif de réception en fonction de la fréquence d'émission dans une bande de fréquences autour d'un mode de résonance du réflecteur, cette phase étant superposée à une phase théorique ajustée,

la figure 4 présente dans une représentation polaire l'évolution des signaux produits par le dispositif de réception en présence d'un réflecteur pour plusieurs distances dudit réflecteur en fonction de la fréquence d'émission dans une bande de fréquence autour d'un mode de résonance dudit réflecteur, ces signaux étant superposés à des signaux théoriques ajustés,

la figure 5a présente la distance du réflecteur calculée par l'unité de traitement comparée à la distance exacte dudit réflecteur dans un environnement sans élément perturbateur,

la figure 5b présente la distance du réflecteur calculée par l'unité de traitement comparée à la distance exacte dudit réflecteur dans un environnement contenant de nombreux éléments perturbateurs, tels des plaques métalliques et des réflecteurs parasites notamment,

la figure 6a présente une séquence de mesures standards en présence de deux véhicules équipés du système d'aide à la conduite selon un mode de réalisation de la présente invention émettant à des instants différents non recouvrant,

la figure 6b présente une séquence de mesures en présence de deux véhicules équipés du système d'aide à la conduite selon un mode de réalisation de la présente invention émettant à des instants susceptibles d'être recouvrant dans une séquence standard,

la figure 7 présente des exemples de codage des informations par les réflecteurs.

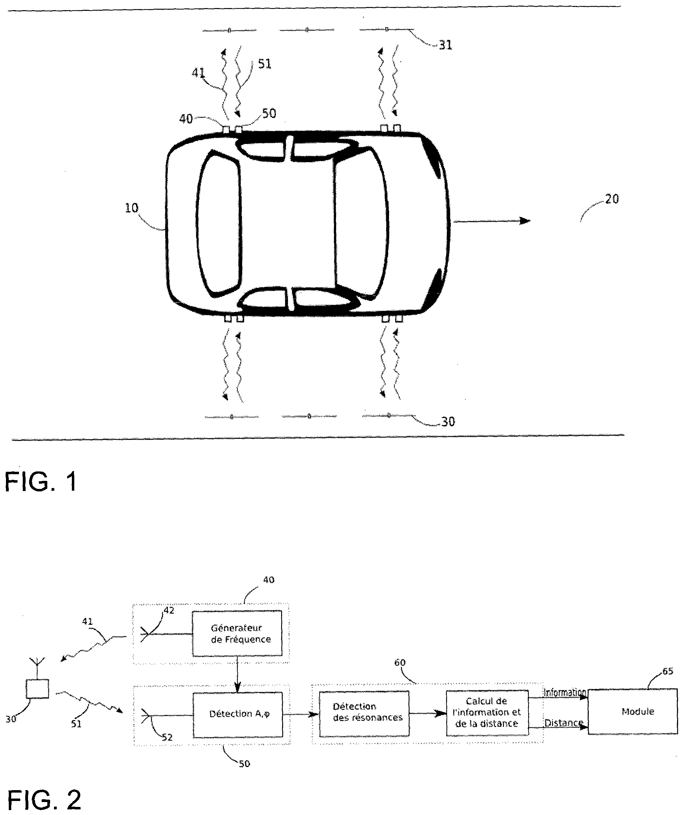

La figure 1 présente un schéma de principe du système d'aide à la conduite selon au moins un mode de réalisation de l'invention. Dans le schéma de la figure 1, un véhicule 10 circule sur une infrastructure routière 20. On entend par infrastructure routière l'ensemble des voies de circulation d'un réseau utilisé pour le déplacement de mobiles. Il peut bien entendu s'agir de routes, mais également d'un réseau à plus petite échelle comme des voies de circulations sur un site industriel, dans un bâtiment, ... Des réflecteurs 30 et 31 sont disposés de part et d'autre de chaque voie de circulation et recouverts par les marquages au sol. Les réflecteurs 30 et 31 peuvent être de natures différentes selon le marquage considéré et/ou être inséré de manière continue ou discontinue afin de coder des informations routières. Des dispositifs d'émission 40 et de réception 50 d'ondes électromagnétiques sont embarqués de part et d'autre du véhicule 10 afin d'émettre une onde électromagnétique 41 vers les réflecteurs 30 situés à droite et 31 situés à gauche de la voie de circulation et de capter les ondes électromagnétiques 51 que lesdits réflecteurs réfléchissent. Le temps mis par l'onde électromagnétique pour aller du dispositifs d'émission 40 à un réflecteur 30 puis revenir dudit réflecteur au dispositif de réception 50 est proportionnel à la distance d entre le véhicule 10 et ledit réflecteur, le coefficient de proportionnalité étant la vitesse de propagation c des ondes électromagnétiques qui est de l'ordre de 300 000 km/s. Ce temps d'aller et retour des ondes électromagnétiques se traduit dans le signal produit par le dispositif de réception par une phase $\phi$ qui varie en fonction de la distance D parcourue par les ondes électromagnétiques selon

$$\phi = 2\,\pi\,f\,D\,/\,c$$

où f est la fréquence des ondes électromagnétiques émises par ledit dispositif d'émission. La distance D parcourue par les ondes électromagnétiques est proportionnelle à la distance d séparant le véhicule des réflecteurs. Ainsi dans le cas où la distance d'aller correspond à la distance de retour, c'est-à-dire lorsque les dispositifs d'émission et de réception ne sont pas trop éloignés l'un de l'autre, on a D = 2 d. Dans le cas contraire un coefficient supérieur à 2 est utilisé. L'avantage d'utiliser la phase comme moyen d'estimation de la distance d entre le véhicule et les réflecteurs est que cela rend ladite estimation indépendante de l'amplitude des ondes électromagnétiques captées par le dispositif de réception 50 et donc indépendante de l'efficacité avec laquelle les ondes électromagnétiques sont réfléchies par les réflecteurs 30. Pour être efficace en toute circonstance climatique, la fréquence des ondes électromagnétiques produites par le dispositif d'émission ne devrait pas être trop élevée pour éviter une atténuation trop importante des ondes électromagnétiques dans l'eau, la neige ou le brouillard par exemple. Une onde électromagnétique de fréquence inférieure à environ 1 GHz est un bon compromis. Bien entendu, si le système d'aide à la conduite est installé dans un endroit à l'écart des intempéries, la fréquence des ondes électromagnétiques émise peut être bien supérieure, typiquement dans une bande de 1 GHz à 100 GHz.

La phase étant une fonction périodique de période $2\pi$ radians, la portée absolue du système d'aide à la conduite est limitée à une demi-période de la phase. Pour des fréquences émises inférieures à 100 MHz une portée absolue de plus de 1.5 m est envisageable rendant le système d'aide à la conduite selon un mode de réalisation de l'invention utilisable avec des infrastructures routières existantes avec des réflecteurs ne possédant qu'un mode de résonance. Cependant pour des fréquences plus élevées, la portée absolue est plus faible, par exemple 173 mm environ à 868 MHz. L'utilisation de réflecteurs avec au moins deux modes de résonance distincts ou l'utilisation de réflecteurs voisins ayant des modes de résonance différents permet d'augmenter la portée absolue du système d'aide à la conduite. À titre d'exemple pour deux modes de résonance, si le premier mode de résonance est à une fréquence f1 et le second mode de résonance est à une fréquence f2, alors la phase $\phi$1 produite par le premier mode de résonance et la phase $\phi$2 produite par le second mode de résonance vérifient respectivement

$$D = n1 \, c \, / \, f1 + c \, \phi1 \, / \, (2 \, \pi \, f1)$$

$$D = n2 \, c \, / \, f2 + c \, \phi2 \, / \, (2 \, \pi \, f2)$$

Dans ces expressions n1 représente le plus grand nombre entier de longueurs d'onde c / f1 de l'onde émise à la fréquence f1 tel que n1 c < D f1 et n2 représente le plus grand nombre entier de longueurs d'onde c / f2 de l'onde émise à la fréquence f2 tel que n2 c < D f2. Si f1 < f2 alors la distance est estimée sans ambiguïté sur une portée absolue de c / (f2 - f1) par

Si

$$\phi2 > \phi1,$$

alors

$$D = c \, ( \, \phi2 - \phi1 \, ) \, / \, ( \, 2 \, \pi \, ( \, f2 - f1 \, ) \, )$$

sinon

$$D = c \, ( \, \phi2 - \phi1 + 2 \, \pi \, ) \, / \, ( \, 2 \, \pi \, ( \, f2 - f1 \, ) \, )$$

Dans ce mode de réalisation, l'écart de fréquence f2 - f1 sert à augmenter la portée absolue de l'estimation de distance mais peut également servir à coder de l'information, un écart de fréquence donné pouvant coder un niveau binaire « 0 » et un écart différent un niveau binaire « 1 ».

Dans le schéma de la figure 1, les réflecteurs 30 et 31 étant positionnés de part et d'autre de la voie de circulation 20 sur laquelle le véhicule 10 circule, la position idéale dudit véhicule correspond alors à des distances horizontales égales entre l'axe principal dudit véhicule et les réflecteurs de droite 30 et les réflecteurs de gauche 31. Cependant d'autres cas de figure sont envisageables, notamment des réflecteurs intégrés dans l'enrobage de la chaussée à toute autre position latérale de la voie de circulation ou de l'infrastructure. Dans la suite de l'exposé, on supposera que les réflecteurs sont sous les marquages au sol disposés de part et d'autre de la voie de circulation.

La figure 2 présente le schéma d'un mode de réalisation selon l'invention d'un réflecteur 30, du dispositif d'émission 40 d'ondes électromagnétiques, du dispositif de réception 50 d'ondes électromagnétiques et de l'unité de traitement 60 permettant de fournir à un module 65 la distance d et les informations portées par les réflecteurs à partir des ondes électromagnétiques captées par le dispositif de réception 50 et connaissant les ondes électromagnétiques émises par le dispositif d'émission 40. Les dispositifs d'émission 40 et de réception 50 sont attachés au véhicule à l'aide d'un support (non représenté sur le schéma). Ledit support permet aux antennes d'émettre et de recevoir préférablement les ondes électromagnétiques dans une polarisation sensiblement parallèle à l'infrastructure et sensiblement orientée selon la direction de la voie de circulation. Ledit support peut être camouflé dans une garniture non-métallique du véhicule de sorte à être rendu invisible vis-à-vis de l'aspect extérieur du véhicule. Les antennes peuvent servir uniquement à l'émission 42, uniquement à la réception 52 ou simultanément à l'émission et la réception ce qui permet au système d'aide à la conduite sujet de l'invention de fonctionner avec un minimum d'antennes, soit une seule antenne. Pour simplifier le propos l'antenne d'émission 42 et l'antenne de réception 52 sont séparées dans la suite de la description. Les dispositifs d'émission 40 et de réception 50 sont reliés à une unité de traitement 60 qui est adaptée pour analyser les signaux du dispositif de réception 50, et notamment déterminer la distance entre les réflecteurs 30 et le véhicule 10, ainsi que lire ou décoder les éventuelles informations codées par les modes de résonance des réflecteurs 30.

Les dispositifs embarqués 40, 50 et 60 peuvent être logés par exemple dans les pare-chocs ou les garnitures du véhicule. Dans certains cas, le dispositif de traitement peut être mutualisé entre plusieurs dispositifs d'émission et de réception, par exemple une unité de traitement peut traiter les signaux provenant d'un dispositif de réception positionné à droite du véhicule et d'un autre à gauche du véhicule. La distance déterminée par l'unité de traitement 60 ainsi que les informations décodées, sont transmises ensuite à un module 65 remplissant plusieurs fonctions, comme par exemple la fusion des données, l'utilisation de l'information décodée, la transmission de la position du véhicule au conducteur, la transmission des informations au conducteur, ... Des messages d'avertissement peuvent être prévus afin d'attirer l'attention du conducteur sur un éloignement trop important de l'axe du véhicule par rapport à la trajectoire idéale symbolisée par le centre de la voie de circulation calculée à partir des distances du véhicule 10 aux réflecteurs de droite 30 et de gauche 31, ou sur des informations importantes codées par les réflecteurs selon leurs modes de résonance ou leur distribution le long de la voie de circulation (virage serré à proximité, ralentissement à prévoir, ...) comme présenté dans la suite de l'exposé.

Les antennes des dispositifs d'émission 40 et de réception 50 peuvent avantageusement être réalisé avec des circuits imprimés pour obtenir des antennes plates faciles à intégrer sur le véhicule.

Le dispositif de réception 50 capte les ondes électromagnétiques environnantes composées de bruits électromagnétiques et des ondes réfléchies par les réflecteurs. Pour éliminer les bruits électromagnétiques et ne conserver que les ondes électromagnétiques provenant des réflecteurs, les bruits électromagnétiques sont approximés, par exemple et de manière non limitative, par une fonction polynomiale. Le degré de cette fonction polynomiale dépend de la complexité des bruits électromagnétiques rencontrés et sera imposée à titre de description à 3. Ce choix n'est pas limitatif vis-à-vis des traitements et devrait être pris uniquement à titre d'exemple. Les ondes réfléchies par les réflecteurs dépendent notamment des modes de résonance desdits réflecteurs. À titre d'exemple et dans un but d'illustration des propos, une résonance simple sera prise en compte. Cet exemple ne doit pas être vue comme limitatif vis-à-vis des traitements qui s'appliquent de la même manière à des modes de résonance plus complexes. Les ondes électromagnétiques reçues par le dispositif de réception se comportent vis-à-vis de la fréquence f des ondes électromagnétiques émises par le dispositif d'émission selon la fonction théorique :

$$B0 + B1\ f + B2\ f^2 + B3\ f^3 + G\ j\ f\ f0\ /\ (Q\ (f0^2 - f^2) + j\ f\ f0)$$

avec

*B0, B1, B2 et B3 les coefficients du polynôme de degré 3 décrivant les bruits électromagnétiques environnants, ces coefficients étant des nombres complexes,

* G le gain des ondes électromagnétiques réfléchies par les réflecteurs, ce gain étant un nombre complexe dont la phase $\phi$ est représentative de la distance à mesurer tel que décrit précédemment, et dont le module est caractéristique de chaque réflecteur et donc susceptible de porter une information si les réflecteurs n'ont pas tous la même amplitude d'émission ou s'ils disposent de plusieurs modes de résonance ayant des gains G distincts,

* f0 la fréquence du mode de résonance du réflecteur, susceptible de porter une information si les réflecteurs n'ont pas tous la même fréquence f0 ou s'ils disposent de plusieurs modes de résonance à des fréquences f0 distinctes,

* Q le coefficient de qualité du mode de résonance du réflecteur, susceptible de porter une information si les réflecteurs n'ont pas tous le même coefficient de qualité Q ou s'ils disposent de plusieurs modes de résonance avec des coefficients de qualité Q distincts,

* j la racine carrée du nombre -1.

Le terme de droite de l'expression est adapté selon la complexité des modes de résonance des réflecteurs. Si les modes de résonance d'un réflecteur sont suffisamment distincts, chaque mode de résonance peut être traité indépendamment et de manière similaire avec l'expression précédente. Dans le but de déterminer la distance entre le véhicule et les réflecteurs selon certains modes de réalisation de la présente invention, l'unité de traitement compare le signal sr produit par le dispositif de réception en fonction de la fréquence des ondes électromagnétiques émises fe par le dispositif d'émission avec la réponse théorique st en fonction de ladite fréquence fe et estime les coefficients B0, B1, B2, B3, G, f0 et Q à l'aide, par exemple et de manière non limitative, d'une méthode des moindre carrés. Dans cette méthode, un critère J est défini selon

$$J = \sum_{fe} (\ sr(fe) - st(fe)\ )^2$$

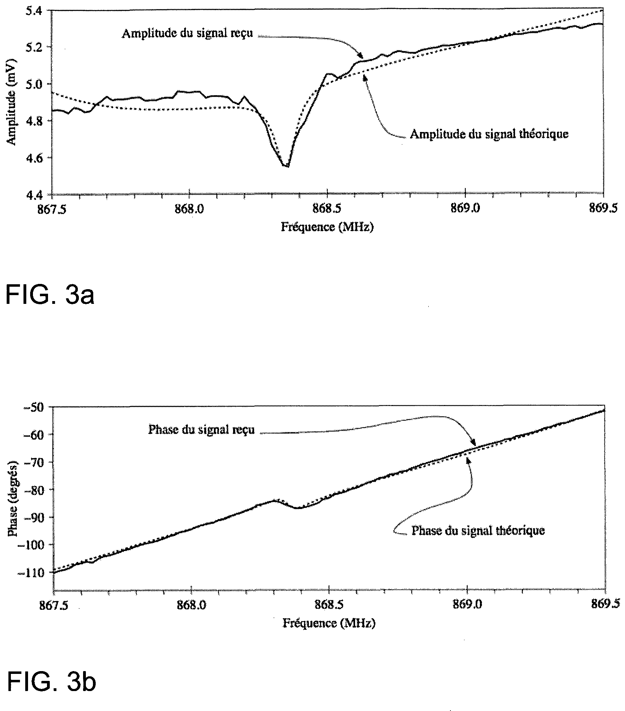

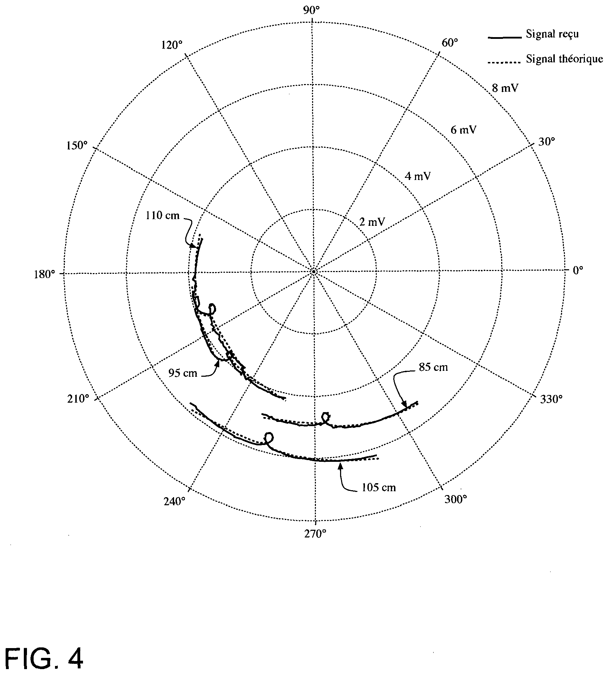

Le minimum dudit critère J, calculé par toute procédure connue directe ou itérative telle que celle du gradient conjugué, permet d'estimer les coefficients B0, B1, B2, B3, G, f0 et Q. La figure 3a montre l'amplitude d'un signal reçu et celle du signal théorique au minimum dudit critère J et la figure 3b montre la phase dudit signal reçu et celle dudit signal théorique au minimum dudit critère J. La figure 4 présente dans une représentation polaire le module et la phase de signaux reçus pour plusieurs distances des dispositifs embarqués au réflecteur auxquels sont superposés les signaux théoriques calculés par la minimisation dudit critère J pour chacune desdites distances. À partir de la phase du gain G, la distance d est estimée selon les expressions précédemment présentées.

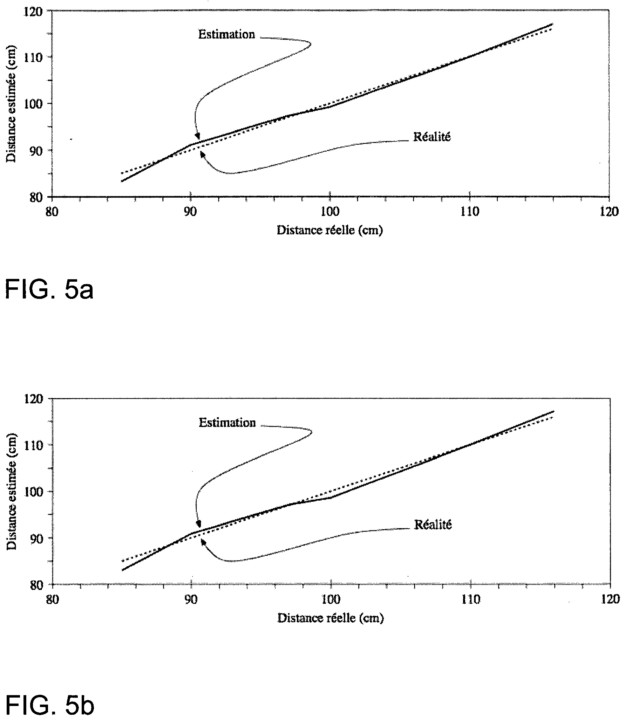

La figure 5a présente la comparaison entre la distance d issue de l'unité de traitement selon les traitements présentés ci-dessus en fonction de la distance réelle du réflecteur aux dispositifs embarqués dans une situation simple où seuls un réflecteur et les dispositifs embarqués sont présents. La figure 5b présente la comparaison entre la distance d issue de l'unité de traitement selon les traitements présentés ci-dessus en fonction de la distance réelle du réflecteur aux dispositifs embarqués dans une situation présentant des éléments perturbateurs tels que des plaques métalliques réfléchissantes et la présence de plusieurs réflecteurs.

Les résultats d'essais montrent que l'estimation de la distance d n'est pas significativement perturbée par la présence d'objets perturbateurs dans l'environnement du réflecteur. L'erreur d'estimation est meilleure que 1 cm sur une plage de mesure de 70 à 110 cm.

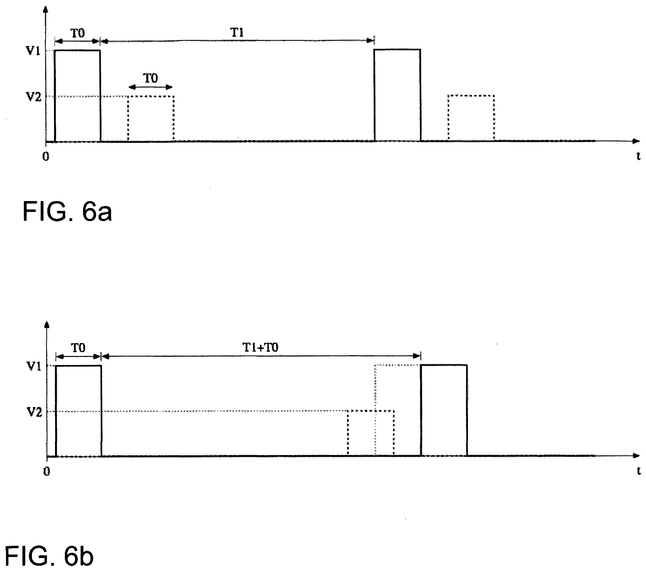

Lorsque deux véhicules équipés du système d'aide à la conduite selon un mode de réalisation de la présente invention passent à proximité l'un de l'autre, le dispositif de réception d'un des véhicules peut être ébloui par le dispositif d'émission de l'autre véhicule si ce dernier émet à la même fréquence au même moment. Pour éviter ce problème, un mode de réalisation avantageux de l'invention consiste à ce que le dispositif d'émission de chaque véhicule émette des ondes électromagnétiques de manière pulsée de sorte à ce qu'il existe toujours un laps de temps pendant lequel un seul des véhicules émette. Il faut mentionner qu'un avantage des modes de réalisation de l'invention est que les ondes électromagnétiques mettent très peu de temps à aller du dispositif d'émission aux réflecteurs puis desdits réflecteurs au dispositif de réception, typiquement moins d'une microseconde, ce qui permet d'effectuer des mesures sur une durée très petite correspondant à un déplacement du véhicule très faible. À titre d'exemple, un véhicule circulant à 130 km/h parcoure une distance inférieure à 4 mm en 100 $\mu$s. A titre de description et de façon non limitative, le dispositif d'émission émet des ondes électromagnétiques de fréquence variable pendant une durée T0 et s'arrête de fonctionner pendant un temps T1 strictement supérieur à T0. Si à la fin du temps d'arrêt T1 aucune onde électromagnétique provenant d'un autre véhicule n'est détectée, alors la procédure d'émission est réitérée. Si au contraire une onde provenant d'un autre véhicule est détectée à la fin du temps d'arrêt T1, le temps d'arrêt est prolongé d'une durée T0. Bien sûr cette procédure n'est donnée qu'à titre d'exemple et toute autre procédure visant à éviter l'émission simultanée de plusieurs dispositifs d'émission est envisageable. La séquence de mesure présentée sur la figure 6a est d'une durée totale T0+T1 et correspond selon la description précédente au cas d'un véhicule seul ou de plusieurs véhicules dans la mesure où chacun émet pendant le temps d'arrêt T1 des autres dispositifs d'émission. La séquence de mesure présentée sur la figure 6b est d'une durée totale de 2T0+T1 et correspond selon la description précédente au cas d'un véhicule détectant l'émission d'un autre véhicule à la fin du temps d'arrêt T1. Ce temps d'arrêt est donc augmenté d'une durée T0.

Une variante du système d'aide à la conduite consiste à ajouter un ou plusieurs dispositifs embarqués additionnels à une position différente selon l'axe principale du véhicule 10. Des premiers dispositifs embarqués peuvent être par exemple intégrés dans le pare-choc avant tandis que des seconds dispositifs embarqués peuvent être intégrés par exemple dans le pare-choc arrière du véhicule. Ainsi la connaissance de la distance calculée comme présenté précédemment pour les premiers dispositifs, associée à la connaissance de la seconde distance produites par les dispositifs additionnels permet d'accéder à l'orientation de l'axe du véhicule par rapport à la voie de circulation. Cette donnée peut s'avérer très utile pour un contrôle anti-dérapage, par exemple.

Les réflecteurs peuvent également être déposés dans l'infrastructure, en prévoyant une encoche peu profonde à cet effet, afin ensuite de les recouvrir par un autre matériau pour combler l'encoche et assurer une tenue plus durable dans le temps des réflecteurs.

Les réflecteurs peuvent servir de support à l'information en définissant des portions successives de réflecteurs, ou intervalle élémentaire, avec une fréquence et/ou un coefficient de qualité du mode de résonance variable dans le cas d'un résonateur simple ou des fréquences et/ou des coefficients de qualité et/ou des amplitudes des modes de résonances dans le cas d'un résonateur plus complexe attribués à chaque portion. Les portions ou intervalles peuvent se toucher (distribution continue de réflecteurs) ou non (distribution discontinue des réflecteurs). Ces intervalles, comme dans le schéma de la figure 1 (repères 31 et 32) peuvent être répartis régulièrement dans le sens de la longueur de la voie de circulation. Dans un mode de réalisation préférentiel, les intervalles élémentaires ont une longueur comprise entre une fois et deux fois la distance moyenne entre lesdits réflecteurs et les dispositifs embarqués de sorte à optimiser la densité d'information portée par les réflecteurs sans produire de mélange trop important entre les informations des différents réflecteurs.

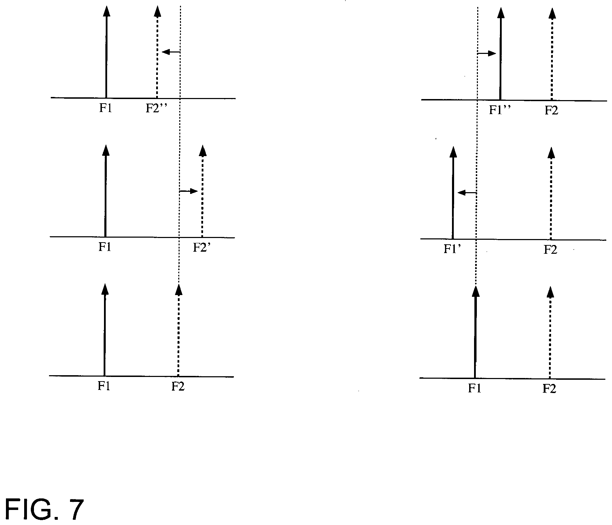

Les variations des modes de résonance d'un intervalle à l'autre, que la distribution des réflecteurs soit continue ou non, peuvent inclure, par exemple et sans caractère limitatif, un simple changement de fréquence f0, ou un simple écart de fréquences entre deux modes de résonance successifs, permettant ainsi de représenter une suite d'état logique « 0 » et « 1 » pour un codage binaire de l'information. Le codage peut être plus complexe si l'on tient compte des différents modes de résonance que peut présenter les réflecteurs. On peut également jouer sur le coefficient de qualité ou l'amplitude du mode de résonance. La figure 7 présente à titre d'exemple plusieurs façons de coder de l'information en utilisant un seul mode de résonance dans le cas où la fréquence d'émission est suffisamment faible pour garantir une portée absolue suffisante, deux modes de résonance sinon, ou encore un ensemble de modes de résonance pour un codage plus riche.

Les informations codées par les réflecteurs peuvent être de natures variées :

* des rappels de la signalisation de l'infrastructure (ligne continue, ligne discontinue, limitation de vitesse, céder le passage, sens interdit, ...),
* des données topographiques de l'infrastructure (pente, rayon de courbure des virages, ...),
* des informations temporaires (travaux, déviations, ...).

Dans le cas d'informations temporaires, des réflecteurs spécifiques peuvent être intégrés, à titre d'exemple non limitatif, à des cônes ou à des plots délimitant des zones de travaux et ainsi redéfinir temporairement les dimensions de la voie de circulation pendant la durée de travaux.

Un autre avantage des réflecteurs selon certains modes de réalisation de l'invention est qu'en cas de perte locale de réflecteurs, le dispositif de détection ne perdra qu'un nombre limité de bits d'information. Le système d'aide à la conduite continue donc à fonctionner dans de tels cas de figures. On peut même envisager de prévoir une certaine redondance de l'information de manière à répéter ces informations à plusieurs reprises.

## Revendications

1.  Un dispositif d'aide à la conduite pour un véhicule (10) circulant sur une infrastructure (20), comportant :

    des moyens d'émission (40) d'ondes électromagnétiques (41) embarqués dans ledit véhicule comprenant au moins une antenne d'émission (42) agencée pour émettre des ondes électromagnétiques de fréquence variable vers des réflecteurs (30, 31) installés dans l'infrastructure,
    des moyens de réception (50) d'ondes électromagnétiques (51) embarqués dans ledit véhicule comprenant au moins une antenne de réception (52), agencée pour recevoir les ondes électromagnétiques réfléchies par lesdits réflecteurs,
    des moyens de traitement (60) configurés pour traiter des ondes électromagnétiques réfléchies par lesdits réflecteurs et captées par les moyens de réception pour déterminer la distance entre lesdits réflecteurs et le véhicule et **caractérisé en ce que** les moyens de traitement sont configurés pour détecter, à partir d'ondes électromagnétiques réfléchies, les modes de résonance des réflecteurs pour déterminer la distance entre lesdits réflecteurs et le véhicule.

2.  Un dispositif (10) selon la revendication 1 dans lequel les moyens de traitement (60) sont configurés pour déterminer la distance entre lesdits réflecteurs (30, 31) et le véhicule à partir de la phase des modes de résonance détectés.

3.  Un dispositif (10) selon l'une quelconque des revendications précédentes dans lequel les moyens de traitement (60) sont configurés pour extraire des ondes électromagnétiques réfléchies (51) des données stockées par les réflecteurs (30, 31) à partir de l'amplitude des modes de résonance détectés.

4.  Un dispositif (10) selon l'une quelconque des revendications 2 ou 3 dans lequel les moyens de traitement (60) sont configurés pour comparer l'amplitude et/ou la phase des ondes électromagnétiques captées (51) par les moyens de réception (50) par rapport à l'amplitude et/ou la phase des ondes électromagnétiques émises (41) par les moyens d'émission (40) et traiter les évolutions de ladite amplitude et/ou de ladite phase en fonction de la fréquence des ondes électromagnétiques émises par les moyens d'émission pour détecter parmi les bruits électromagnétiques environnants les modes de résonance imposés par les réflecteurs (30, 31) afin de calculer la position du véhicule par rapport à celle desdits réflecteurs.

5.  Un dispositif (10) selon l'une quelconque des revendications précédentes dans lequel les moyens d'émission (40) sont configurés pour émettre des ondes électromagnétiques (41) à une fréquence lentement variable en direction des réflecteurs (30, 31).

6.  Un dispositif (10) selon l'une quelconque des revendications précédentes dans lequel les moyens d'émission (40) sont configurés pour émettre les ondes électromagnétiques (41) par impulsions séparées par des laps de temps irréguliers

7.  Un dispositif (10) selon l'une quelconque des revendications précédentes dans lequel ladite au moins une antenne (42) des moyens d'émission (40) présente un faible couplage direct avec ladite au moins une antenne (52) des moyens de réception (50) soit par leur positionnement sur ledit véhicule, soit par l'ajout d'un ou plusieurs matériaux absorbants faisant barrage aux ondes émises (41) par ladite au moins une antenne des moyens d'émission vers ladite au moins une antenne des moyens de réception, soit par leur polarisation croisée chacune étant à un angle sensiblement autour de 45° par rapport à la polarisation des réflecteurs (30, 31).

8. Un dispositif (10) selon l'une quelconque des revendications précédentes dans lequel les ondes électromagnétiques émises (41) sont de fréquence inférieure à 1 GHz.

9. Un véhicule (10) comportant un dispositif d'aide à la conduite selon l'une quelconque des revendications 1 à 8 dans lequel des moyens de réception (50) et des moyens d'émission (40) sont placés de chaque côté du véhicule de sorte à détecter les réflecteurs (30) positionnés à droite et les réflecteurs (31) positionnés à gauche d'une voie de circulation de l'infrastructure (20).

10. Un dispositif (30, 31) d'aide à la conduite, pour une infrastructure de circulation (20), comportant des réflecteurs d'ondes électromagnétiques (30, 31) agencés pour réfléchir des ondes électromagnétiques émises (41) par un véhicule (10), selon la revendication 9, circulant sur l'infrastructure vers ledit véhicule, chaque réflecteur comprenant au moins un résonateur présentant au moins un mode de résonance de sorte à modifier la puissance et/ou la phase des ondes réfléchies (51) par lesdits réflecteurs en fonction de la fréquence des ondes réfléchies dans lequel ledit au moins un résonateur est adapté pour coder selon la phase et/ou l'amplitude des modes de résonance dudit au moins un résonateur des informations associées à un élément différent de l'infrastructure (20) et destinées audit véhicule (10).

11. Un dispositif (30, 31) selon la revendication 10, dans lequel chaque réflecteur (30, 31) comporte au moins une antenne dont le diagramme de rayonnement est choisi pour permettre une captation et un rayonnement dans un plan sensiblement parallèle à une chaussée de l'infrastructure (20) et dans une direction principale sensiblement perpendiculaire à la direction de circulation.

12. Un dispositif (30, 31) selon l'une quelconque des revendications 10 ou 11, disposé dans une composition de marquage au sol

13. Un dispositif (30, 31) selon l'une quelconque des revendications 10 à 12, dans lequel les ondes électromagnétiques réfléchies (51) sont de fréquence inférieure à 1 GHz.

14. Un système d'aide à la conduite comportant un dispositif (10) embarqué selon l'une quelconque des revendications 1 à 8 et un dispositif (30, 31) pour une infrastructure de circulation (20) selon l'une quelconque des revendications 10 à 13.


**Patentansprüche**

1. Hilfsvorrichtung zum Fahren für ein Fahrzeug (10), das auf einer Infrastruktur (20) fährt, umfassend:

   Sendemittel (40) von elektromagnetischen Wellen (41), die in dem genannten Fahrzeug integriert sind, umfassend wenigstens eine Sendeantenne (42), die zum Senden der elektromagnetischen Wellen variabler Frequenz zu Reflektoren (30, 31) angeordnet sind, die in der Infrastruktur installiert sind,
   Empfangsmittel (50) von elektromagnetischen Wellen (51), die in dem genannten Fahrzeug integriert sind, umfassend wenigstens eine Empfangsantenne (52), die zum Empfangen der elektromagnetischen Wellen angeordnet ist, die von den genannten Reflektoren reflektiert sind,
   Verarbeitungsmittel (60), die zum Verarbeiten der elektromagnetischen Wellen, die von den genannten Reflektoren reflektiert und von den Empfangsmitteln erfasst sind, gestaltet sind, um die Entfernung zwischen den genannten Reflektoren und dem Fahrzeug zu bestimmen, und

   **dadurch gekennzeichnet sind, dass** die Verarbeitungsmittel zum Erkennen der Resonanzmodi der Reflektoren ausgehend von reflektierten magnetischen Wellen gestaltet sind, um die Entfernung zwischen den genannten Reflektoren und dem Fahrzeug zu bestimmen.

2. Vorrichtung (10) gemäß Anspruch 1, bei der die Verarbeitungsmittel (60) zum Bestimmen der Entfernung zwischen den genannten Reflektoren (30, 31) und dem Fahrzeug ausgehend von der Phase der erkannten Resonanzmodi gestaltet sind.

3. Vorrichtung (10) gemäß irgendeinem der voranstehenden Ansprüche, bei der die Verarbeitungsmittel (60) zum Extrahieren der reflektierten elektromagnetischen Wellen (51) der Daten gestaltet sind, die von den Reflektoren (30, 31) ausgehend von der Amplitude der erkannten Resonanzmodi gespeichert sind.

**4.** Vorrichtung (10) gemäß irgendeinem der Ansprüche 2 oder 3, bei der die Verarbeitungsmittel zum Vergleichen der Amplitude und / oder Phase der von den Empfangsmitteln (50) erfassten elektromagnetischen Wellen (51), in Bezug auf die Amplitude und / oder die Phase der elektromagnetischen Wellen (41), die von den Sendemitteln (40) gesendet sind, und zum Verarbeiten der Entwicklungen der genannten Amplitude und / oder der genannten Phase in Abhängigkeit von der Frequenz der von den Sendemitteln gesendeten elektromagnetischen Wellen, zum Erkennen der von den Reflektoren (30, 31) auferlegten Resonanzmodi aus den umgebundenen elektromagnetischen Geräuschen, um die Position des Fahrzeugs in Bezug auf die der genannten Reflektoren zu berechnen, gestaltet sind.

**5.** Vorrichtung (10) gemäß irgendeinem der voranstehenden Ansprüche, bei der die Sendemittel (40) zum Senden der elektromagnetischen Wellen (41) in einer Frequenz gestaltet sind, die in Richtung der Reflektoren (30, 31) langsam variabel sind.

**6.** Vorrichtung (10) gemäß irgendeinem der voranstehenden Ansprüche, bei der die Sendemittel (40) zum Senden der reflektierten elektromagnetischen Wellen (41) per von unregelmäßigen Zeitspannen getrennten Impulsen gestaltet sind.

**7.** Vorrichtung (10) gemäß irgendeinem der voranstehenden Ansprüche, bei der die genannte wenigstens eine Antenne (42) der Sendemittel (40) eine schwache direkte Kopplung mit der genannten wenigstens einen Antenne (52) der Empfangsmittel (50) entweder durch ihre Positionierung auf dem genannten Fahrzeug oder durch das Hinzufügen eines oder mehrerer absorbierender Materialien aufweist, die gesendeten Wellen (41), die von der genannten wenigstens einen Antenne der Sendemittel zu der genannten wenigstens einen Antenne der Empfangsmittel gesendet sind, oder durch ihre Kreuzpolarisation blockiert, wobei jede in einem Winkel von deutlich 45° im Verhältnis zur Polarisierung der Reflektoren (30, 31) ist.

**8.** Vorrichtung (10) gemäß irgendeinem der voranstehenden Ansprüche, bei der die gesendeten elektromagnetischen Wellen (41) eine niedrigere Frequenz als 1 GHz aufweisen.

**9.** Fahrzeug (10), umfassend eine Hilfsvorrichtung zum Fahren gemäß irgendeinem der Ansprüche 1 bis 8, bei dem Empfangsmittel (50) und Sendemittel (40) auf jeder Seite des Fahrzeugs derart platziert sind, dass die Reflektoren (30), die rechts positioniert sind, und die Reflektoren (31), die links von einer Fahrbahn der Infrastruktur (20) positioniert sind, erfasst sind.

**10.** Hilfsvorrichtung (30, 31) zum Fahren für eine Verkehrsinfrastruktur (20), umfassend elektromagnetische Wellenreflektoren (30, 31), die angeordnet sind, um von einem Fahrzeug (10) gesendete elektromagnetische Wellen (41) zu reflektieren, gemäß Anspruch 9, das auf der Infrastruktur zu dem genannten Fahrzeug verkehrt, wobei jeder Reflektor wenigstens einen Resonator umfasst, der wenigstens einen Resonanzmodus derart aufweist, dass die Leistung und / oder die Phase der reflektierten Wellen (51) von den genannten Reflektoren in Abhängigkeit von der Frequenz der reflektierten Wellen modifiziert ist, bei der der genannte wenigstens eine Resonator geeignet ist, um gemäß der Phase und / oder der Amplitude Resonanzmodi des genannten wenigstens einen Resonators der Informationen zu kodieren, die einem von der Infrastruktur (20) unterschiedlichen Element zugeordnet und für das genannte Fahrzeug (10) bestimmt sind.

**11.** Vorrichtung (30, 31) gemäß Anspruch 10, bei der jeder Reflektor (30, 31) wenigstens eine Antenne umfasst, deren Strahlungsdiagramm ausgewählt ist, um ein Erfassen und ein Strahlen in einer Ebene, die deutlich parallel zu einer Fahrbahn der Infrastruktur (20) ist, und in einer Hauptrichtung, die deutlich lotrecht zur Fahrtrichtung ist, zuzulassen.

**12.** Vorrichtung (30, 31) gemäß irgendeinem der Ansprüche 10 oder 11, die in einer Markierungsverbindung am Boden angeordnet ist.

**13.** Vorrichtung (30, 31) gemäß irgendeinem der Ansprüche 10 bis 12, bei der die reflektierten elektromagnetischen Wellen (51) eine niedrigere Frequenz als 1 GHz aufweisen.

**14.** Hilfssystem zum Fahren, umfassend eine integrierte Vorrichtung (10) gemäß irgendeinem der Ansprüche 1 bis 8, und eine Vorrichtung (30, 31) für eine Verkehrsinfrastruktur (20) gemäß irgendeinem der Ansprüche 10 bis 13.

**Claims**

1. Driver assistance device (10) for a vehicle traveling on an infrastructure (20), comprising:

   means (40) for transmitting electromagnetic waves (41), onboard said vehicle and comprising at least one transmitting antenna (42) arranged to transmit variable frequency electromagnetic waves towards reflectors (30, 31) installed within the infrastructure,
   means (50) for receiving electromagnetic waves (51), onboard said vehicle and comprising at least one receiving antenna (52) arranged to receive the electromagnetic waves reflected by said reflectors,
   processing means (60), configured to process electromagnetic waves reflected by said reflectors and captured by the receiving means, so as to determine the distance between said reflectors and the vehicle, and

   **characterized in that** the processing means are configured to detect, based on the reflected electromagnetic waves, the resonance modes of the reflectors to determine the distance between said reflectors and the vehicle.

2. Device (10) according to claim 1, wherein the processing means (60) are configured to determine the distance between said reflectors (30, 31) and the vehicle based on the phase of the detected resonance modes.

3. Device (10) according to any one of the preceding claims, wherein the processing means (60) are configured to extract, from the reflected electromagnetic waves (51), data stored by the reflectors (30, 31) based on the amplitude of the detected resonance modes.

4. Device (10) according to any one of claims 2 or 3, wherein the processing means (60) are configured to compare the amplitude and/or the phase of the electromagnetic waves captured (51) by the receiving means (50) with the amplitude and/or the phase of the electromagnetic waves transmitted (41) by the transmitting means (40), and to process the changes in said amplitude and/or said phase as a function of the frequency of the electromagnetic waves transmitted by the transmitting means to detect, within the surrounding electromagnetic noise, the resonance modes imposed by the reflectors (30, 31) in order to calculate the position of the vehicle relative to that of said reflectors.

5. Device (10) according to any one of the preceding claims, wherein the transmitting means (40) are configured to transmit electromagnetic waves (41) at a variable frequency towards the reflectors (30, 31).

6. Device (10) according to any one of the preceding claims, wherein the transmitting means (40) are configured to transmit the electromagnetic waves (41) in pulses separated by regular time intervals.

7. Device (10) according to any one of the preceding claims, wherein said at least one antenna (42) of the transmitting means (40) has a direct weak coupling to said at least one antenna (52) of the receiving means (50) either through their positioning on said vehicle, or through the addition of one or more absorbent materials to block the waves (41) transmitted by said at least one antenna of the transmitting means to said at least one antenna of the receiving means, or through their cross-polarization, each being at an angle substantially around 45° relative to the polarization of the reflectors (30, 31).

8. Device (10) according to any one of the preceding claims, wherein the frequency of the transmitted electromagnetic waves (41) is below 1 GHz.

9. Vehicle (10) comprising a driver assistance device according to any one of claims 1 to 8, wherein receiving means (50) and transmitting means (40) are placed on either side of the vehicle so as to detect the reflectors (30) positioned on the righthand side and the reflectors positioned on the left-hand side (31) of a traffic lane of the infrastructure (20).

10. Driver assistance device (30, 31) for a traffic infrastructure (20), comprising electromagnetic wave reflectors (30, 31) arranged so as to reflect electromagnetic waves transmitted (41) by a vehicle (10) according to claim 9 traveling on the infrastructure back towards said vehicle, each reflector comprising at least one resonator having at least one resonance mode so as to modify the power and/or the phase of the waves reflected (51) by said reflectors as a function of the frequency of the reflected waves, wherein said at least one resonator is designed to encode, using the phase and/or the amplitude of the resonance modes of said at least one resonator, items of information associated to a different element of the infrastructure (20) and intended for said vehicle (10).

11. Device (30, 31) according to claim 10, wherein each reflector (30, 31) comprises at least one antenna whose directivity pattern is selected to enable collection and radiation in a plane substantially parallel to a roadway of the infrastructure (20) and in a principal direction substantially perpendicular to the direction of travel.

12. Device (30, 31) according to any one of claims 10 or 11 arranged within a composition of ground markings.

13. Device (30, 31) according to any one of claims 10 to 12, wherein the frequency of the reflected electromagnetic waves (51) is below 1 GHz.

14. Driver assistance system comprising an onboard device (10) according to any one of claims 1 to 8, and a device (30, 31) for a travel infrastructure (20) according to any one of claims 10 to 13.

FIG. 1

FIG. 2

FIG. 3a

FIG. 3b

FIG. 4

FIG. 5a

FIG. 5b

FIG. 6a

FIG. 6b

FIG. 7

## RÉFÉRENCES CITÉES DANS LA DESCRIPTION

**Documents brevets cités dans la description**

- US 2008167821 A

**Littérature non-brevet citée dans la description**

- **C. CUGIANI.** *Millimétré Wave Radar Sensor for the Highway Global Positioning of a Vehicle*

- **A. POLYCHRONOPOULOS.** *Integrated object and road border traking using 77GHz automotive radars*